# EUROPÄISCHE PATENTANMELDUNG

(11) **EP 0 859 168 A2**
(43) Veröffentlichungstag der Anmeldung: **19.08.1998**
(21) Anmeldenummer: 97102308.0
(22) Anmeldetag: 13.02.1997
(51) Int. Cl.: F16H 48/28

(54) **Differentialgetriebe mit automatischer Antriebsregulierung der Antriebsräder des Kraftfahrzeugs**

(71) Anmelder: Alojz, Loncaric, 2000 Maribor (SI)
(72) Erfinder: Alojz, Loncaric, 2000 Maribor (SI)
(74) Vertreter: Lewald, Dietrich, Dipl.-Ing.

(57) **Zusammenfassung**

Differentialgetriebe mit automatischer Antriebsregulierung der Antriebsräder des Kraftfahrzeugs löst das Problem des einfachen vertikalen Differentialgetriebes mit Synchronwirkung bei der Fahrt durch die Kurve mit gleichmäßigem und ununterbrochenem Drehmoment des Motors auf beide Antriebsräder und löst weiterhin das Problem der automatischen Blockierung der Antriebsräder gegen Gleiten. Die in das Innengehäuse (1) eingesetzten Achsenzahnräder (4 und 5) sind im Stirn-Seiten-Eingriff mit dem dazugehörenden, vertikal auf diese angebrachtes Paar Ausgleichszahnräder (6,7) beziehungsweise (8,9), so daß sie zwei sich gegenüberliegende Zahnradgetriebe mit sich überschneidenden Achsen bilden, zwishen die in die Mitte des Gehäuses die Hilfsachse (10) mit Verbindungszahnrädern (11,12) eingesetzt ist, welche sich im Stirn-Seiten-Eingriff mit den dazugehörenden mitliegenden Ausgleichszahnrädern (6,8) beziehungsweise (7,9) befinden. Vorsgesehen ist auch die Ausführung ohne Hilfsache (10) und ohne Verbindungszahnräder (11,12). Die verzahnten Laufflächen (c und d) der Zahnräder (4,5,6,7,8,9,11,12) können geradeförmig beziehungsweise flachförmig oder radial konkav ausgeführt sein. Ausgleichszahnräder (6,7,8,9) können zylindrische, hyperbolische und kombinierte Konstruktionen aufweisen. Differentialgetriebe nach der Erfindung ist, abhängig von der Ausführung, bei Personen- und Lastkraftwagen beliebiger Kraft und Tragfähigkeit anwendbar.

## Beschreibung

Der Gegenstand der Erfindung ist ein Differentialgetriebe mit automatischer Antriebsregulierung der Antriebsräder des Kraftfahrzeugs bzw. präzieser Zahnradübertragung der Kreisbewegung mit Planetenrädern, welche eine automatische Bremsung bzw. automatische Blockade des Differentialeffekts über die Halbachse auf die Antriebsräder des Kraftfahrzeugs ermöglicht.
Nach der internationalen Patentklassifizierung wird die Erfindung in F 16H 1/45 und zusätzlich in F 16H 1/44 eingereiht.

Das technische Problem, gelöst durch diese Erfindung, ist eine olche Konstruktion des Differentialgetriebes für Kraftfahrzeuge, die eine automatische Blockierung der Antriebsräder gegen Gleiten ermöglicht und die eine geometrische Überholung eines Antriebsrades bei gleichzeitiger geometrischer Verzögerung des anderen Antriebsrades des Kraftfahrzeuges beim Vorwärtsfahren und beim Rückwärtsfahren, in geradliniger oder Kreisrichtung, wobei die gesamte Konstruktion einfach ist.

Es gibt einige bekannte Lösungen der Differentialgetriebe mit der Funktion der Blockierung der Antriebsrader des Kraftfahrzeugs. Bekannt ist die Lösung des sogenannten TORSEN Differentials des Erfinders Vernon Gleasman, patentiert in Amerika im Jahre 1958. Bei dieser Erfindung wird das Problem der geometrischen Bewegung der Antriebsräder des Kraftfahrzeugs, bei gleichzeitiger Garantierung der Blockierungsfunktion so gelöst, daß auf der Antriebshalbachse koaxial zwei flachförmige Zahnräder angebracht sind, die eng aneinander liegend im Getriebe enden. Die schneckenförmige Verzahnung der Zahnräder ist gleichgerichtet im Paar ausgeführt und zwar in linker bzw. rechter Richtung. Mit diesem Paar Schneckenräder befinden sich im Eingriff je zwei Zahnräder, angebracht senkrecht und tangential auf den Mantel des schneckenförmigen Zahnkranzes, miteinander verbunden und gelagert im Joch, dem Bestandteil des großen tellerförmigen Zahnrades, welches über die Kardanwelle das Drehmoment vom Antriebsmotor erhält. Die Konstruktion dieser bekannten Lösung weist sechzehn außerordentlich anspruchsvolle Zahnräder auf und ist infolge dessen massiver als die klassischen Differentiale. Das erfordert eine anspruchsvolle technologische Bearbeitung und eine komplizierte Zusammensetzung.
Aus dem amerikanischen Patent US 4,509,388 ist die Lösung des Differentialgetriebes bekannt, welche zur Gänze in das zweiteilige, auf den Achsen gelagerte Gehäuse, eingesetzt ist.

Zwischen den beiden Teilen des Gehäuses ist ein Kronrad angebracht, welches die Antriebsleistung des Motors empfängt und abgibt, wobei sich das ganze Gehäuse des Differentialgetriebes dreht bzw. rotiert. Die Synchronzahl der Umdrehungen der Antriebsräder des Kraftfahrzeugs wird im Falle des Gleitens eines der Räder so gelöst, daß der Axialdruck, zu dem es in diesem Fall zwischen den beiden mit Nuten und dazwischenliegenden Zylindern versehenen Tellern kommt, das gleiche Drehmoment auf die beiden Antriebsräder des Fahrzeugs überträgt. Diese bekannte Konstruktion erfordert eine sehr komplizierte und anspruchsvolle technologische Ausführung und Zusammensetzung.
Das gemeinsame Merkmal der angeführten bekannten Lösungen besteht darin, daß keine gleichzeitige, gleichmäßige Übertragung der Antriebskraft auf die beiden Antriebsräder des Fahrzeugs in Richtung des Vorwärtsfahrens oder beim Rückwärtsfahren ermöglicht werden kann Die Ausführung der Konstruktion dieser bekannten Lösungen ermöglicht die Übertragung des Drehmoments des Antriebsmotors nur auf eines der beiden Antriebsräder und zwar so, daß es sich beim Vorwärtsfahren auf das eine und beim Rückwärtsfahren nur auf das zweite Antriebsrad überträgt. Ein weiterer Mangel der beschriebenen bekannten Lösungen ist der, daß sie nur eine 100% Differentialsperre ermöglichen, nicht aber auch die dazwischenliegenden Differentialsperren zwischen 0% und 100%. Die beschriebenen technischen Mängel der bekannten Lösungen stellen ein ungelöstes technische Problem dar.

Nach der Erfindung wird das Problem durch das Differentialgetriebe mit automatischer Antriebsregulierung der Antreibsräder des Kraftfahrzeugs gelöst, welches aus zwei Grundausführungen mit je einer Ausführungsvariante besteht, wobei diese Konstruktionen die Erfindungsidee darstellen und wobei die Vorzugsausführung zusammengesetzt ist aus dem Innengehäuse 1, dessen Gehäuse a kreisförmig bewegbar im nichtdargestellten Außengehäuse eingelagert ist und in welchem diametral entgegengesetzt koaxial und in derselben Ebene die Halbachsen 2 und 3 mit Achsenzahnrädern 4 und 5 angebracht sind sowie senkrecht auf die Längsachse, aus Halbachsen 2,3 und aus der dazwischen eingesetzten Hilfsachse 10 mit Verbindungszahnrädern 11,12, bestehend noch aus den Ausgleichszahnrädern 6,7,8 und 9, wobei das Ausgleichszahnrad 6 im direkten Eingriff mit dem Achsenzahrad 4 und dem Zwischenzahnrad 11 ist, das Ausgleichszahnrad 7 aber im Eingriff mit dem Achsenzahnrad 4 und Verbindungszahnrad 12, und wobei das Ausgleichszahnrad 8 im Eingriff mit dem Achsenzahnrad 5 und dem Verbindungszahnrad 11 ist, das Ausgleichszahnrad 9 aber im Eingriff mit dem Achsenzahnrad 5 und dem Verbindungszahnrad 12 und zwar so, daß die Hilfsachse 10 das Differentialgetriebe nach der Erfindung in zwei völlig gleiche und übereinstimmende Hälften teilt, was auch für die gemeinsame Längsmittelachse der Halbachse 2 und 3 gilt. Die Erfindung wird präziser in den Vorzugsausführungsbeispielen und Figuren beschrieben, welche folgendes darstellen:
- Fig.1: Differentialgetriebe nach der Erfindung im Grundriß und Querschnitt in der axialen Ebene längs der Halbachse,
- Fig.2: Gleich wie in Fig.1, nur das zweite Vorzugsausführungsbeispiel,
- Fig.3: Gleich wie in Fig. 1, nur das dritte Vorzugsausführungsbeispiel ohne Hilfsachse und beide Verbindungszahräder,
- Fig.4: Gleich wie in Fig.3, nur das vierte Vorzugsausführungsbeispiel,
- Fig.5: Seitenblick des Achsenzahnrades mit zwei Paar Ausgleichszahnrädern im Querschnitt A-A des ersten Vorzugsausführungsbeispiels aus Fig.1 und
- Fig.6: Gleich wie in Fig.5, nur im Querschnitt B-B des zweiten Vorzugsausführungsbeispiels aus Fig.2.

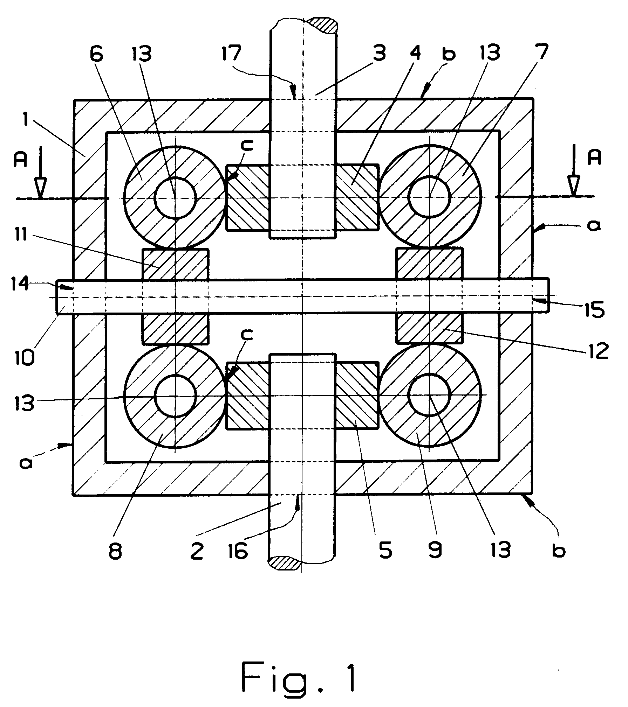

Das Differentialgetriebe mit automatischer Antriebsregulierung der Antriebsräder des Kraftfahrzeugs nach dem ersten Vorzugsausführungsbeispiel, dargestellt in Fig.1 bilden das Innengehäuse 1 mit Gehäuse a und der Seitenwand b, Halbachsen 2 und 3, Achsenzahnräder 4,5, mindestens ein Paar Ausgleichszahnräder 6,7 und 8,9 auf den Achsen 13 sowie Hilfsachse 10 mit mindestens zwei Verbindungszahnrädern 11 und 12. Die Längsmittelachse der Hilfsachse 10 und die Längsachse der Halbachse 2 und 3 teilen jede für sich das Differentialgetriebe nach der Erfindung in zwei völlig gleiche und übereinstimmende Hälften. Das Innengehäuse 1 ist gelagert und kreisförmig bewegbar im nichtdargestellten Außengehäuse in Standardausführung angebracht. Durch die Löcher 16,17 in den sich gegenüberliegenden Wänden b des Gehäuses 1 sind in derselben Ebene und auf derselben Längsachse die Halbachsen 2 und 3 angebracht und gelagert mit je einem Achsenzahnrad 5 beziehungsweise 4 auf den sich gegenüberliegenden Enden. Das Achsenzahnrad 5 ist im ständigen Eingriff mit dem Paar Ausgleichszahnräder 6,7, während das Achsenzahnrad 4 im ständigen Eingriff mit dem Paar Ausgleichszahnräder 8,9 ist, wobei beide Paare der Ausgleichszahnräder 6,7 und 8,9 vertikal auf dem dazugehörenden Achsenzahnrad 4 beziehungsweise 5 angebracht sind, was ihnen einen gegenseitigen Stirn-Seiten-Eingriff ermöglicht. In der Mitte des Innengehäuses 1 und zwischen den beiden Achsenzahnrädern 4 und 5 ist durch die Löcher 14,15 die Hilfsachse 10 fix eingesetzt mit mindestens zwei Verbindungszahnrädern 11 und 12, die darauf kreisförmig bewegbar gelagert sind, so daß das Verbindungszahnrad 11 im ständigen Eingriff mit den Ausgleichszahnrädern 6 und 8 ist und das Verbindungszahnrad 12 im ständigen Eingriff mit den Ausgleichszahnrädern 7 und 9 ist. Die Hilfsachse 10 ist also in die Löcher 14,15 fix beziehungsweise unbewegbar eingesetzt. In einem anderen Ausführungsbeispiel kann die Hilfsachse 10, wenn sie aus zwei Teilen zusammengesetzt ist, in den Löchern 14,15 kreisförmig bewegbar gelagert sein, die Verbindungszahnräder 11 und 12 sind aber darauf fix aufgesteckt. Eine bessere Stütze des Innengehäuses 1 ermöglicht die Ausführung mit fixer beziehungsweise nichtbewegbarer Hilfsachse 10. Die Ausgleichszahnräder 6,7,8 und 9 sind fix auf den fest im Innengehäuse 1 gelagerten Drehachsen 13 angebracht, sie können aber auch axial bewegbar in Richtung der Längsachse der Halbachse 2 oder 3 sein.Das erste Vorzugsausführungsbeispiel aus Fig. 1 weist also zwei Paar sich vertikal gegenüberliegende Zahnradgetriebe auf, wobei das erste Paar das Zahnrad 4 mit midestens zwei Ausgleichszahnrädern 6,7 bildet, das zweite Paar bildet aber das Achsenzahnrad 5 mit mindestens zwei Ausgleichszahnrädern 8,9 und ist weiter zusammengesetzt aus der in die Mitte zwischen den beiden Zahnradgetrieben eingesetzten Hilfsachse 10, mit mindestens zwei Verbindungszahnrädern 11,12. Von der Halbachse 3, gesehen im Uhrenzeigersinn, sind im ständigen, untereinander ununterbrochenem aufeinanderfolgendem Eingriff das Achsenzahnrad 4 und das Ausgleichszahnrad 7, das Verbindungszahnrad 12, das Ausgleichszahnrad 9, das Achsenzahnrad 5, das Ausgleichszahnrad 8, das dazwischenliegende Verbindungszahnrad 11 und das Ausgleichszahnrad 6, welches mit dem Echsenzahnrad 4 im Eingriff ist. Durch das Anbringen beider Verbindungszahnräder 11,12 zwischen die beschriebenen Zahnradgetriebe, ist eine Verbindung beider Hälften des Differentialgetriebes nach der Erfindung zu einer homogenen Ganzheit hergestellt. Die nächste Verbindung ist im Innengehäuse 1 ausgeführt, denn alle Ausgleichszahnräder 6,7,8 und 9 sind darauf befestigt und so verbinden sie die beiden Hälften des Differentialgetriebes nach der Erfindung.
Die Achsenzahnräder 4,5 sind als axiales Schneckenrad mit diagonaler Verzahnung ausgeführt. Die Ausgleichszahnräder 6,7,8 und 9 sind als Schnecken mit diagonaler Verzahnung ausgeführt. Die Verbindungszahnräder 11,12 sind als Schneckenrad mit diagonaler Verzahnung ausgeführt. Im ersten Vorzugsausführungsbeispiel sind die verzahnten Laufflächen der Achsenzahnräder 4 und 5 geradeförmig ausgeführt, was auch für die verzahnten Laufflächen der Verbindungszahnräder 11 und 12 gilt, wobei sich das Differentialgetriebe nach diesem Ausführungsbeispiel für Übertragung kleinerer und größerer Belastungen bzw. Kräfte eignet, vorzugsweise also für kleinere Kraftfahrzeuge mit niedriger Kraft, insofern es nur mit einem Paar Ausgleichszahrädern 6,7 auf dem Achsenzahnrad 4 und einem Paar Ausgleichszahnrädern 8,9 auf dem Achsenzahnrad 5 ausgeführt ist. Baut man zusätzlich zwei oder mehrehre Paare Ausgleichszahnräder 6,7 und 8,9 in die Achsenzahnräder 4 und 5 ein, ist das Differentialgetriebe nach diesem Ausführungsbeispiel auch bei größeren Belastungen und größeren Kraftübertragungen anwendbar.
Sind die Ausgleichszahnräder 6,7,8 und 9 nicht bewegbar in axialer Richtung der Halbachse 2 und 3 und sind die Verbindungszahnräder 11,12 nicht bewegbar in axialer Richtung der Hilfsachse 10, stellt die Konstruktion des Differentialgetriebes nach diesem Vorzugsausführungsbeispiel ein starres System dar. Ist aber in einem der beiden Paare oder in beiden Paaren der Ausgleichszahnräder 6,7 und 8,9 mindestens eins von ihnen in axialer Richtung der Halbachse 2 beziehungsweise 3 bewegbar, bekommen wir ein elastisches System, was im Falle der Bewegbarkeit in axialer Richtung der Hilfsachse 10 auch für das Paar Verbindungszahnräder 11,12 gilt.

Die Diagonalverzahnung der Achsenzahnräder 4,5, der Ausgleichszahnräder 6,7 und 8,9 sowie der Verbindungszahnräder 11,12 ist im Winkel ausgeführt, vorzugsweise von 45°.

Die schon beschriebene Verteilung der Ausgleichszahnräder 6,7,8 und 9 sowie der Verbindungszahnräder 11,12 ermöglicht dem Differentialgetriebe nach der Erfindung die dringend notwendige Differenz für die unterschiedliche geometrische Weglänge zwischen den beiden nichtdargestellten Antriebsrädern des Kraftfahrzeugs, wenn es durch die Kurve fährt, wobei die Diagonalverzahnung auf den Zahnrädern 4,5,6,7,8,911 und 12 nicht hinderlich ist.
Die vollständige Selbstsperre des Differentialgetriebes nach der Erfindung ist durch die vertikale Verteilung beziehungsweise Aufstellung der Ausgleichszahnräder Paare 6,7 und 8,9 gesichert, die den vom Drehmoment des nichtdargestellten Motors ausgehenden Druck beziehungsweise Kraftauswirkung über alle Ausgleichszahnräder 6,7 und 8,9 auf die beiden Achsenzahnräder 4 und 5 ermöglichen. Das Wesensmerkmal der angemeldeten Erfindung ist also die vertikale Aufstellung der Ausgleichszahnräder 6,7 und 8,9 gegenüber den dazugehörenden Achsenzahnrädern 4 beziehungsweise 5. Im Falle, daß sich eines der Antriebsräder des Kraftfahrzeugs auf einer Asphalt- oder Betonfahrunterlage, das andere aber auf einer Sand- oder eisglatten Fahrunterlage befindet, wird ein Gleiten des Antriebsrades auf der Sandunterlage mit dem Differentialgetriebe nach der Erfindung verhindert bzw. unmöglich gemacht. Dies wird durch die Ausgleichszahnräder 6,7 und 8,9 verhindert, beziehungsweise im größten Maße durch jenes Paar dieser Zahnräder, das auf der Seite des Antriebsrades, welches sich auf der Asphalt- oder Betonunterlage befindet, angebracht ist. Auf diese Weise ist die negativ gerichtete Kraft, die das Gleiten dieses Rades verursachen würde, schon zu Beginn ihrer Wirkung blockiert, was das Gleiten des Rades auf der Sandfahrunterlage verhindert und die vollständige Selbstsperre des Differentialgetriebes nach der Erfindung darstellt.

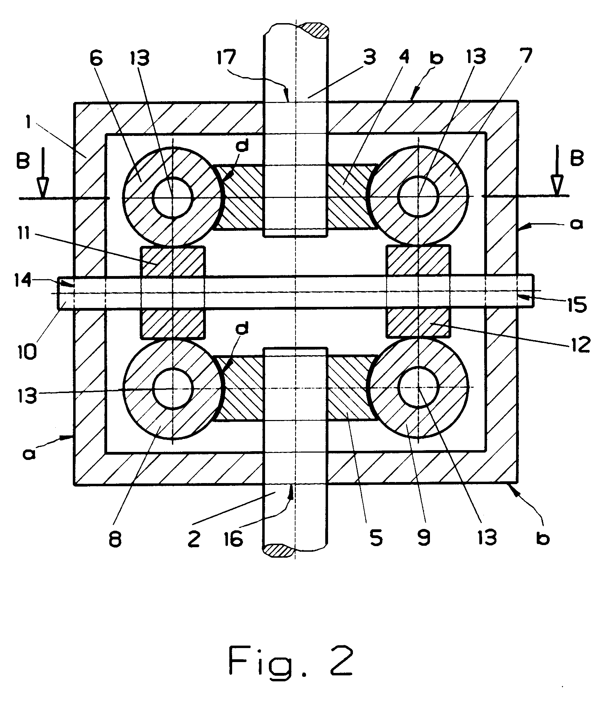

In Fig.2 ist das zweite Vorzugsausführungsbeispiel des Differentialgetriebes nach der Erfindung dargestellt, welches sich von dem ersten Vorzugsausführungsbeispiel aus Fig.1 nur dadurch unterscheidet, daß die verzahnten Laufflächen d beider Achsenzahnräder 4 und 5 radial vertieft ausgeführt sind, beziehungsweise im Querschnitt konkavförmig sind. Die Laufflächen der Verbindungszahnräder 11,12 sind geradeförmig ausgeführt und können in einem anderen Ausführungsbeispiel so wie bei den Achsenzahnrädern 4,5 konkavförmig ausgeführt sein. Die Konkavausführung der Laufflächen d der Achsenzahnräder 4,5 und der Verbindungszahnräder 11,12 ermöglicht die Anwendung des Differentialgetriebes nach der Erfindung für die Übertragung höherer Belastungen beziehungsweise Kräfte, also vorzugsweise für größere und stärkere Lastkraftwagen. Die übrigen Konstruktionsmerkmale dieses Ausführungsbeispiels sind jenen, schon vorher beschriebenen Merkmalen, des ersten Vorzugsausführungsbeispiels des Differentialgetriebes aus Fig.1 gleich. Es muß insbesondere darauf hingewiesen werden, daß das Ausführungsbeispiel, dargestellt in Fig.2, eine 100% Genauigkeit bei der Herstellung und Zusammensetzung erfordert, denn jegliche Abweichung bei der Wirkung des Differentialgetriebes könnte Schäden an den Grundelementen hervorrufen.

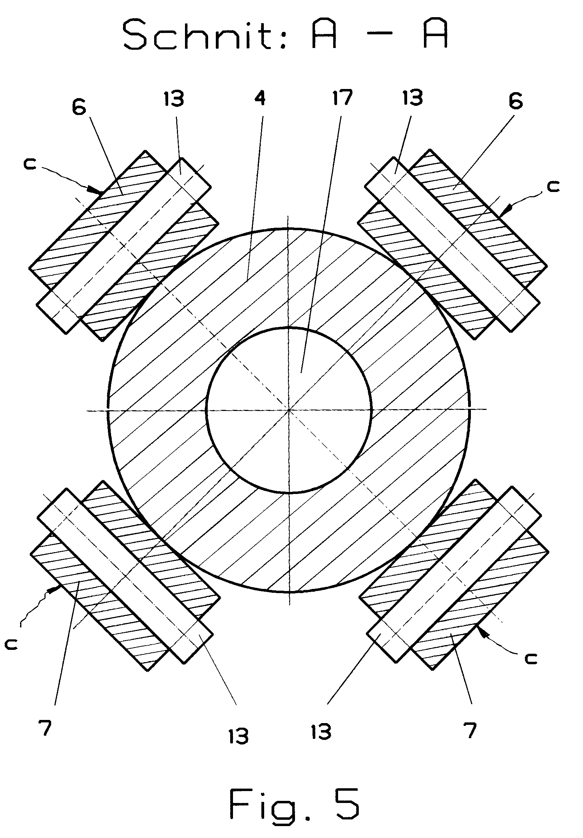

In Fig.5 ist das erste Vorzugsausführungsbeispiel, ersichtlich aus Fig.1, im Querschnitt A-A vom Seitenblick jener Teil des Differentialgetriebes nach der Erfindung dargestellt, welcher die Aufstellung und den Eingriff von zwei Paar zylindrischen Ausgleichszahnräder 6,7 in das Achsenzahnrad 4 zeigt, wobei der Teilkreis 4 x 90° beträgt und die Langsmittelachse der Halbachse 3 senkrecht auf die Längsmittelachse jeglicher Achse 13 liegt.

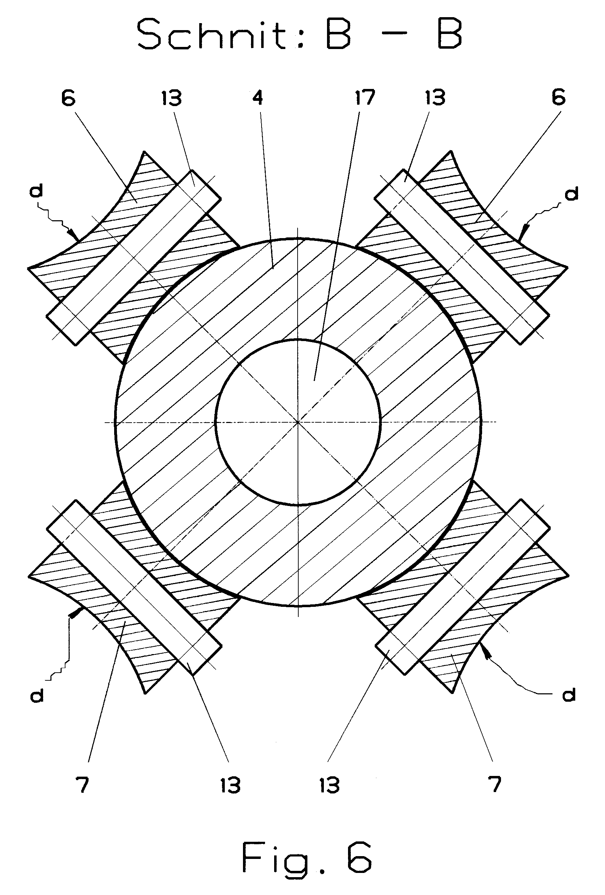

In Fig.6 ist das zweite Ausführungsbeispiel, ersichtlich aus Fig.2, im Querschnitt B-B mit denselben Merkmalen, wie in Fig.5 beschrieben,dargestellt, nur daß die Ausgleichszahnräder 6,7, in diesem Fall in zwei Paaren, eine hyperbolische Form aufweisen.

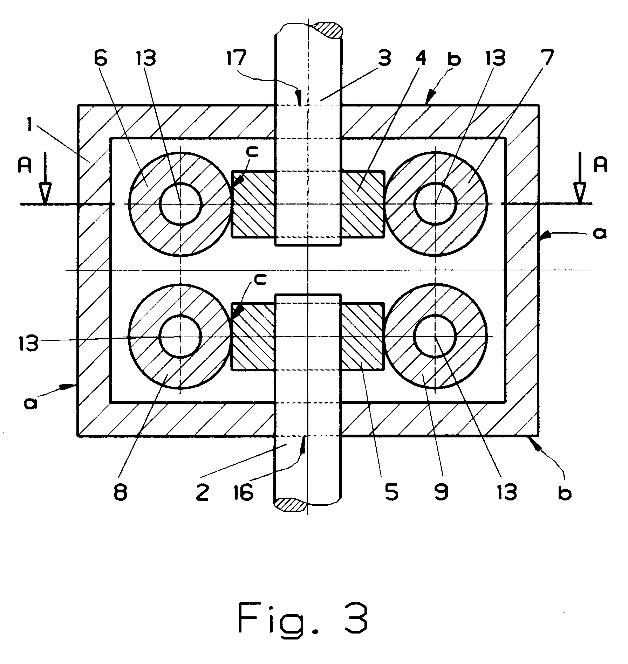

In Fig.3 dargestelltes drittes Ausführungsbeispiel des Differentialgetriebes nach der Erfindung unterscheidet sich vom Ausführungsbeispiel aus Fig.1 dadurch, daß es ohne Zwischenachse 10 und somit ohne beide Verbindungszahnräder 11,12 ausgeführt ist. Es besteht aus dem Innengehäuse 1, mit den Löchern 16 und 17 in beiden sich gegenüber befindenden Wänden b und aus durch diese eingesetzten Halbachsen 2,3 mit dazugehörendem Achsenzahnrad 4 beziehungsweise 5 und besteht desweiteren aus mindestens zwei Paar Ausgleichszahnräder 6,7 und 8,9. Im Eingriff mit dem Achsenzahnrad 4 befindet sich mindestens ein Paar Ausgleichzahnräder 6,7 und mit dem Achsenzahnrad 5 mindestens ein Paar Ausgleichszahnräder 8,9, so daß das Paar Ausgleichszahnräder 6,7 vertikal auf dem Achsenzahnrad 4 angebracht ist, was einen Stirn-Seiten-Eingriff der Ausgleichszahnräder 6,7 mit dem Achsenzahnrad 4 ermöglicht. Das gleiche gilt für das Paar Ausgleichszahnräder 8,9, ebenso vertikal auf dem Achsenzahnrad 5 angebracht, mit dem sie im Eingriff sind. Obwohl dieses Ausführungsbeispiel keine dazwischenliegende Hilfsachse 10 mit Verbindungszahnrädern 11,12 aufweist, wie die Beispiele aus Fig.1 und Fig.2, besteht eine Verbindung zwischen den beiden Hälften des Differentialgetriebes und zwar über das Innengehäuse 1, denn die Ausgleichszahnräder 6,7 und 8,9 sind über die Achse 13 daran befestigt, wodurch die Ganzheitlichkeit und Homogenität seiner Kontruktion garantiert sind. Dir Kraft, erzeugt durch das Drehmoment des Motors, wird über das nichtdargestellte große tellerförmige Zahnrad auf das Innengehäuse 1 übertragen und über die Ausgleichszahnräder 6,7 und 8,9 sowie über die Achsenzahräder 4,5 auf die Halbachsen 2,3 und dadurch auf die dazuhörenden Räder des Kraftfahrzeugs. Im Falle, daß bei der Fahrt eines der Antriebsräder des Fahrzeugs auf eine glatte Fahrfläche auffährt, dreht sich dieses nicht ins Leere beziehungsweise gleietet nicht, denn dies wird durch automatische Blockierung aller Ausgleichszahnräder 6,7 und 8,9 zu dem dazugehörendem Achsenzahnrad 4 beziehungsweise 5, worauf sie vertikal angebracht sind, verhindert. Auf diese Weise wird verhindert, daß sich ein Antriebsrad des Fahrzeugs wegen Gleitens, ins Leere und schneller als das andere Antriebsrad drehen würde, denn die vertikale Aufstellung der Ausgleichszahnräder 6,7 und 8,9 ermöglicht eine mehrfach größere Kräfteverteilung als das klassische Differentialgetriebe mit Diagonalverzahnung. Die Drehmomentkraft des Motors drückt nämlich vertikal beziehungsweise senkrecht auf die Ausgleichszahnräder 6,7 und 8,9 und nicht in Richtung ihres Drehens, wie das bei den klassischen Differentialen mit Diagonalverzahnung der Fall ist. Der Stirn-Seiten-Eingriff des Achsenzahnräder 4 und 5 mit dazugehörenden Ausgleichszahnrädern 6,7 beziehungsweise 8,9 funktioniert nach dem Schraubenlinienprinzip. Diese Wirkung ist effektvoller bei flachgeneigter Diagonalverzahnunng, zum Beispiel im Winkel von 25° und 35°, wodurch genauso ein Differenzausgleich der unterschiedlichen Weglänge zwischen den beiden Antriebsrädern bei der Fahrt durch die Kurve garantiert ist. Die Antriebsräder passen sich nämlich automatisch an die untereinander unterschiedliche geometrische Weglänge an; je schneller sich das Außenantriebsrad dreht, um so langsamer dreht sich das Innenantriebsrad des Fahrzeugs. Das langsamere Drehen des Innenantriebsrades spiegelt sich auf dem dazugehörendem Zahnradgetriebe beziehungsweise auf dem dazugehörenden Achsenzahnrad 4 oder 5 und auf das zu den beiden gehörendes Paar Ausgleichsräder 6,7 oder 8,9 ab, so daß sie sich auf der Seite des Innenantriebsrades genau soviel langsamer drehen, wieviel schneller sie sich auf der Seite des äußeren Antriebskörpers drehen. Die verzahnten Laufflächen c der Achsenzahnräder 4 und 5 sind bei diesem Ausführungsbeispiel geradeförmig ausgeführt.

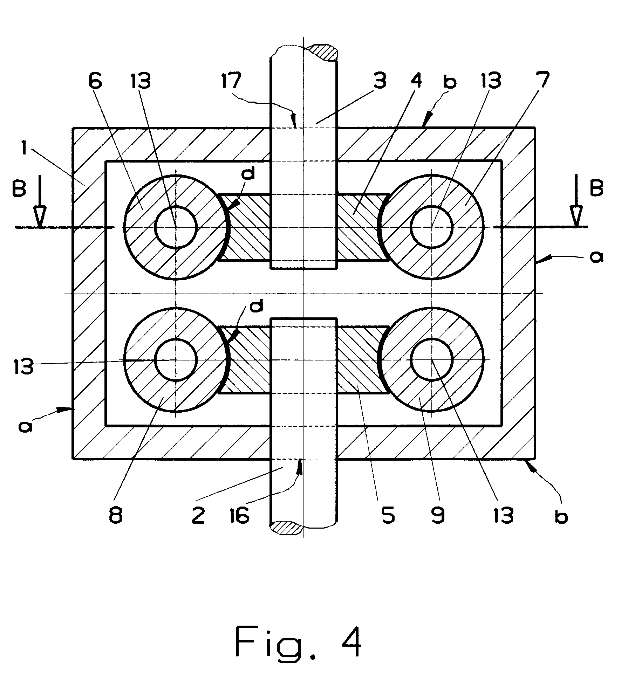

In Fig.4 ist das vierte Vorzugsausführungsbeispiel des Differentialgetriebes nach der Erfindung dargestellt, welches sich von dem Ausführungsbeispiel aus Fig.3 dadurch unterscheidnet, daß die verzahnten Laufflächen d der beiden Achsenzahnräder 4 und 5 radial vertieft ausgeführt sind beziehungsweise im Querschnitt eine konkave Form aufweisen. Auch diese Ausführung erfordert 100% Genauigkeit bei der Herstellung und Zusammensetzung, denn jegliche, auch die geringste Abweichung, könnte beim Wirken Schäden auf den Grundelementen oder dem ganzen Differetialgetriebe hervorrufen.

Die Ausführungsbeispiele aus Fig. 3 und Fig.4 sind vorzugsweise bei Personenkraftwagen anwendbar.

Lösungen, die charakteristisch für die vorher beschriebene einzelne Ausführungsbeispiele des Differentialgetriebes sind, dargestellt in Fig.1, Fig.2, Fig.3 und Fig.4, können in einigen anderen Ausführungsbeispielen, die aber nicht dargestellt und beschrieben sind, bezüglich der Konstruktion beliebig untereinander kombiniert werden, wobei die Achsenzahnräder 4 und 5, jedes für sich selber, im Eingriff mit mindestens einem, zwei oder mehreren dazugehörenden Paaren von Ausgleichszahnrädern 6,7 beziehungsweise 8,9 sein können, wodurch die Einheitlichkeit und der Umfang der angemeldeten Erfindung bezüglich der vorher beschriebenen gemeinsamen und besonderen technischen Merkmale nicht geändert sind.

## Patentansprüche

1. Differentialgetriebe mit automatischer Antriebsregulierung der Antriebsräder des Kraftfahrzeugs, bestehend aus Innen- und Außengehäuse, worin in derselben Ebene und koaxial Halbachsen mit dazugehörendem tellerförmigen Zahnrad gelagert sind, dadurch gekennzeichnet, daß in das Innengehäuse (1) auf mindestens einem Achsenzahnrad (4) vertikal mindestens ein oder mehrere Paare Ausgleichszahnräder (6,7) angebracht sind und mindestens auf einem gegenüberliegendem Achsenzahnrad (5) vertikal mindestens ein oder mehrere Paare Ausgleichszahnräder (8,9) angebracht sind, so daß die Kopplungen der Achsenradzähne (4) und (5) mindestens zwei Zahnradgetriebe mit sich überschneidenden Achsen bilden, wobei zwischen diesen und in die Mitte des Innengehäuses (1) mindestens eine Hilfsachse (10) angebracht ist, mit mindestens zwei Verbindungszahnrädern (11,12), welche beide Teile des Differentialgetriebes beziehungsweise die Zahnradgetriebe verbinden, denn das Verbindungszahnrad (11) ist im Eingriff mit den Ausgleichszahnrädern (6) und (8), das Verbindungszahnrad (12) aber im Eingriff mit den Ausgleichszahnrädern (7) und (9), wobei die Ausgleichszahnräder (6,7) gleichzeitig auch im Eingriff mit dem Achsenzahnrad (5) sind und wobei sich die Achsen der Verbindungszahnräder (11,12) und der Ausgleichszahnräder (6,7,8,9) überschneiden.

2. Differentialgetriebe mit automatischer Antriebsregulierung der Antriebsräder des Kraftfahrzeugs, bestehend aus dem Innen- und Außengehäuse, worin in derselben Ebene und koaxial die Halbachsen mit dazugehörendem tellerförmigen Zahnrad gelagert sind, dadurch gekennzeichnet, daß mindestens auf einem Achsenzahnrad (4) vertikal mindestens ein Paar Ausgleichszahnräder (6,7) angebracht ist und auf mindestens einem gegenüberliegenden Achsenzahnrad (5) vertikal mindestens ein Paar Ausgleichszahnräder (8,9) angebracht ist, so daß die Kopplungen der Achsenzahnräde (4) und (5) mindestens zwei, untereinander getrennte Achsenradgetriebe mit sich überschneidenden Achsen bilden, in denen das Achsenzahnrad (4) gleichzeitig im Eingriff mit mindestens einem Paar Ausgleichszahnräder (6,7) ist und das Achsenzahnrad (5) gleichzeitig im Eingriff mit mindestens einem Paar Ausgleichszahnräder (8,9) ist, wobei die Ausgleichszahnräder (6,7) und (8,9) über die Achse (13) im Innengehäuse (1) befestigt sind und wobei die sich gegenüberliegenden Ausgleichszahnräder (6) und (8) sowie (7) und (9) weder im direkten noch im indirekten Eingriff sind.

3. Differentialgetriebe nach Anspruch 1 und 2, dadurch gekennzeichnet,daß es im Falle, wenn die Paare der Ausgleichszahnräder (6,7) und (8,9) nicht bewegbar in axialer Richtung der Halbachsen (2,3) sind und die Verbindungszahnräder (11,12) nicht bewegbar in axialer Richtung der Hilfsachse (10) sind, stellt eine starre Konstruktion dar.

4. Differentialgetriebe nach Anspruch 1 und 2, dadurch gekennzeichnet,daß es im Falle, wenn wenigstens ein Zahnrad in den Paaren der Ausgleichszahnräder (6,7), (8,9) in axialer Richtung der Halbachsen (2,3) bewegbar ist, beziehungsweise wenigstens ein Verbindungszahnrad (11) oder (12) im Paar axial bewegbar ist, eine elastische Konstruktion darstellt, in der auch die Achsenzahnräder (4) oder (5) beziehungsweise (4) und (5) axial bewegbar sind.

5. Differentialgetriebe nach Anspruch 1 und 2, dadurch gekennzeichnet, daß das Achsenzahnrad (4) und Achsenzahnrad (5), die Ausgleichszahnräder (6,7) und (8,9) sowie die Verbindungszahnräder (11,12) eine Diagonalverzahnung aufweisen, vorzugsweise im Winkel von 25° bis 45°, wobei die Schräge der Verzahnung aller im gegebenen Ausführungsbeispiel umfaßten Zahnräder den gleichen Winkel aufweist und wobei das Übersetzungsverhältnis zwischen ihnen beliebig sein kann.

6. Differentialgetriebe nach Anspruch 1 und 2, dadurch gekennzeichnet, daß die Achsenzahnräder (4) und (5) mit dazugehörenden Paaren der Ausgleichszahnräder (6,7) beziehungsweise (8,9) im Stirn-Seiten-Eingriff sind und auch die Verbindungszahnräder (11) und (12) sind im Stirn-Seiten-Einfriff mit den dazugehörenden mitliegenden Ausgleichszahnrädern (6,8) beziehungsweise (7,9).

7. Differentialgetriebe nach Anspruch 1 und 2, dadurch gekennzeichnet,daß die Zahnräder in Paaren der Ausgleichszahnräder (6,7) und (8,9) zylindrische, hyperbolische oder kombinierte Konstruktionen aufweisen können.

8. Differentialgetriebe nach Anspruch 1 und 2, dadurch gekennzeichnet, daß die verzahnten Laufflächen (c,d) der Achsenzahnräder (4) und (5) sowie der Ausgleichszahnräder (6,7) und (8,9) als gerade Flächen ausgeführt werden können, was auch für die verzahnten oder als radial konkave Laufflächen der Verbindungszahnräder (11,12) gilt.

9. Differentialgatriebe nach Anspruch 1 und 2, dadurch gekennzeichnet,daß die Ausgleichszahnräder (6,7) und (8,9) im Innengehäuse (1) so angebracht sind, daß sie vertikal beziehungsweise senkrecht auf dem dazugehörenden Achsenrad (4) beziehungsweise (5) liegen.

10. Differentialgetriebe nach Anspruch 1, dadurch gekennzeichnet, daß die Hilfsachse (10) fix beziehungsweise nichtbewegbar in den Löchern (14,15) im Innengehäuse (1) aufgesteckt werden kann, sie kann aber auch kreisförmig bewegbar gelagert sein, wenn sie aus zwei Teilen zusammengesetzt ist, wobei die Verbindungszahnräder (11,12) fix und bewegbar auf der Hilfsachse (10) angebracht ist.

11. Differentialgetriebe nach Anspruch 1 und 2, dadurch gekennzeichnet,daß die Achsenzahnräder (4,5) nicht axial bewegbar sind, wenn sich in Richtung ihrer Halbachsen (2,3) bewegbare Ausgleichszahnräder (6,7) beziehungsweise (8,9) in einem, zwei oder mehreren Paaren befinden.
